# EUROPEAN PATENT SPECIFICATION

(11) **EP 3 954 217 B1**
(45) Date of publication and mention of the grant of the patent: **17.09.2025**
(21) Application number: 21195726.1
(22) Date of filing: 19.01.2017
(51) Int. Cl.: A21D 13/16, A23D 9/007, A23D 9/013, A23D 7/01, A21D 13/00, A21D 10/00, C11C 3/06, A21D 13/80

(54) **METHOF OF USING A SELF-EMULSIFYING FAT COMPOSITION**
VERFAHREN ZUR VERWENDUNG EINER SELBSTEMULGIERENDEN FETTZUSAMMENSETZUNG
PROCÉDÉ D'UTILISATION D'UNE COMPOSITION DE GRAISSE AUTO-ÉMULSIFIANTE

(30) Priority: 01.02.2016 EP 16275016
(43) Date of publication of application: 16.02.2022
(62) Divisional of application: 17701303.4
(73) Proprietor: Bunge Loders Croklaan B.V., 1521 AZ Wormerveer (NL)
(72) Inventor: Van Rooijen, Christiaan, 1521 AZ Wormerveer (NL); Smit, Helen Cornelia, 1521 AZ Wormerveer (NL); Ma, Jun, 1521 AZ Wormerveer (NL)
(74) Representative: Potter Clarkson

(56) References cited:
- EP-A1- 1 057 887
- US-A- 4 656 045
- US-A1- 2007 148 313
- OKIY D. ET AL.: "The Physical Properties of Modified Palm Oil", J. SCIENCE FOOD AND AGRICULTURE, vol. 29, no. 12, 31 December 1978 (1978-12-31), pages 1061 - 1068, XP002759797
- BALJIT S GHOTRA ET AL: "Lipid shortenings: a review", FOOD RESEARCH INTERNATIONAL, vol. 35, no. 10, 1 January 2002 (2002-01-01), pages 1015 - 1048, XP055207204, ISSN: 0963-9969, DOI: 10.1016/S0963-9969(02)00163-1

## Description

This invention relates to a method of preparing a margarine, bakery fat, puff pastry fat (such as a laminating fat) or cake fat using a self-emulsifying fat composition.

Fats are often used in edible products including, for example, margarine, bakery fat, laminating (i.e., puff pastry) fat and cake fat. These fats sometimes contain an emulsifier to aid the formation of a uniform dispersion where the product is an emulsion and/or to assist with dispersion of the fat when it is used.

Fat compositions which are used in baking and which may cause a layering effect in products after baking are known as laminating fats. For example, the desirable effect of layering that is achieved in bakery products such as puff pastry can be achieved using laminating fats. Puff pastry is a light, flaky pastry made from dough which contains layers of a fat such as butter or a vegetable fat. The layers of fat are usually obtained by spreading the fat on the dough, folding the dough, and rolling it out. The layered structure of the puff pastry is due at least in part to the layers of the fat. Products in which this type of structure is desirable include croissants, Danish pastries and pies. The fats are predominantly made up of triglycerides.

Glycerides are present in many food products and are the main components of edible fats and oils. Glycerides may be in the form of mono-, di- or tri- glycerides having one, two or three fatty acid acyl groups, respectively, bonded to a glycerol backbone. Triglycerides are the predominant type of glyceride in edible fats and oils.

EP-A-2194792 describes compositions comprising: (A) from about 20 % to about 80 % by weight of an interesterified palm oil olein; (B) from about 5 % to about 25 % by weight of a liquid oil; (C) from about 15 to about 75 % by weight of a fat selected from the group consisting of palm oil stearins, interesterified palm oil stearins, palm oil oleins, fully hydrogenated oils and mixtures thereof. The compositions may be used as a bakery fat, particularly a laminating fat for products such as puff pastry.

US2007/0148313 A1 discloses a glyceride emulsifier having an elevated diglyceride portion that is especially useful in preparing puff pastry products. The high diglyceride emulsifier is obtained by the interesterification or glycerolysis of triglycerides with glycerol.

There is a need for improved emulsifiers for fats that can impart beneficial properties to the fats themselves, to processes in which the fats are used and to products made from the fats.

According to the invention, there is provided a method of preparing a margarine, bakery fat, puff pastry fat (such as a laminating fat) or cake fat as defined in Claim 1. The invention is further defined by the dependent claims.

Also described herein is a method of preparing a self-emulsifying fat composition, comprising the steps of:
a) providing a fat composition comprising triglycerides (TG);
b) separating a portion from the fat composition;
c) reacting the separated portion of the fat composition with glycerol to obtain a reacted portion comprising monoglycerides (MG) and diglycerides (DG); and
d) reintroducing at least part of the reacted portion into the fat composition to obtain a self-emulsifying fat composition comprising predetermined amounts of MG and DG.

Also described herein is a self-emulsifying fat composition obtainable by the method of the invention.

Described herein is a method of preparing a fat composition, comprising the steps of:
a) providing a fat composition comprising triglycerides (TG);
b) separating a portion from the fat composition;
c) reacting the separated portion of the fat composition with glycerol to obtain a reacted portion comprising monoglycerides (MG) and diglycerides (DG); and
d) reintroducing at least part of the reacted portion into the fat composition to obtain a fat composition comprising predetermined amounts of MG and DG,
wherein the fat composition preferably has emulsifying properties.

The term "self-emulsifying fat", as used herein, refers to a fat that contains MG and/or DG capable of acting as emulsifiers for the fat and that can be derived from the fat itself. It has surprisingly been found that there are advantages in using as emulsifier for a fat a composition comprising MG and DG that has a fatty acid profile similar to that of the fat itself.

The term "fat" refers to glyceride fats and oils containing fatty acid acyl groups and does not imply any particular melting point. Fats predominantly comprise triglycerides (TG). The fat may typically comprise some solid and liquid components at 20 °C.

The term "fatty acid", as used herein, refers to straight chain saturated or unsaturated (including mono- and poly- unsaturated) carboxylic acids having from 12 to 24 carbon atoms. A fatty acid having n carbon atoms and x double bonds may be denoted Cn:x. For example, lauric acid may be denoted C12:0 and oleic acid may be denoted C18:1. Percentages of fatty acids in compositions referred to herein include acyl groups in tri, di- and mono- glycerides present in the glycerides as is customary terminology in the art.

The fat composition comprising triglycerides that is provided in a) may be a single fat or a mixture of two or more different fats. The fat or fats may be interesterified either individually or as a blend. The fat or fats may be non-interesterified. The fat composition typically comprises at least 85 % by weight triglycerides, more preferably at least 95 % triglycerides, such as at least 96 %, at least 97 %, or at least 98 % triglycerides, based on the weight of the fat composition. Suitable fats include palm oil and its fractions, palm kernel oil and its fractions, and mixtures thereof, optionally interesterified. Preferred fats include palm stearin and palm kernel olein, and mixtures thereof, optionally interesterified, such as: an interesterified mixture of palm stearin and palm kernel oil; and (non-interesterified) palm stearin.

The fat composition preferably comprises C16:0 and C18:1 fatty acids as acyl groups in glycerides, each in an amount of greater than 5 % by weight and may comprise C12:0, C14:0, C16:0 and C18:1 fatty acids as acyl groups in glycerides each in an amount of greater than 5 % by weight.

The fat may be separated in b) by any conventional method of removing a portion of a substance. The chemical composition of the portion of the fat composition that is separated will be the same as the chemical composition of the original fat composition from which it is separated. For example, the separated portion will have the same fatty acid profile as the fat composition. Thus, the composition of the portion that is separated is unchanged relative to the fat composition.

The portion of the fat composition that is separated in b) represents from 0.5 to 20 % by weight of the fat composition, preferably from 0.5 to 10 % by weight, more preferably from 0.5 to 5 % by weight.

Step c) involves the reaction of the separated portion of the fat composition with glycerol.

During this reaction, exchange of fatty acyl groups takes place between triglycerides (TG) in the fat composition and the glycerol (also referred to herein as glycerin) to form a product having increased levels of MG and DG. Typically, the molar ratio of the fat composition to glycerol in the reaction is in the range of from 2:1 to 1:2, more preferably from 3:2 to 2:3, such as from 1.2:1 to 1:1.2. The reaction may be catalyzed, for example by a lipase. Suitable lipases include, for example, fungal lipases such as the lipase from *Candida antarctica* B, for example Novozym^{®} 435 (available from Novozymes A/S, Denmark). The reaction is preferably carried out at temperatures in the region of from 15 to 75 °C, more preferably from 55 to 70 °C. The reaction is stopped when the amounts of MG and DG have reached the desired levels, such as 10 to 60 % MG and 15 to 70 % DG, more preferably 20 to 50 % MG and 30 to 60 % DG, by weight of the reacted portion, with the balance of the glycerides being TG. The reaction generally takes from 6 to 48 hours.

Preferably, after step c), the MG and DG combined amount to at least 25 % by weight of the reacted portion, more preferably at least 50 % by weight, such as from 60 to 90 % by weight.

Amounts of MG, DG and TG in the compositions and portion of the invention may be determined by techniques known to those skilled in the art, such as the method described in the examples below.

After step c) and prior to step d), the reacted portion is preferably subjected to treatment that increases its purity in glycerides, for example by removal of free fatty acids. Preferred treatment involves refining, for example by bleaching and deodorizing, more preferably at a temperature of from 150 to 200 °C.

Mixing of the reacted portion into the fat composition preferably takes place in d) to form a homogeneous mixture.

In step d), the reacted portion, optionally after treatment to increase its purity in glycerides, is added back into the fat composition. Any method can be used that mixes the reacted portion with the fat composition. If one or both of the reacted portion and the fat composition contain substantial amounts of solids at ambient temperature, the two are preferably mixed at an elevated temperature at which they are both liquid or substantially liquid (e.g., having a solid fat content of 10% or less determined by NMR on the respective composition stabilised for 16 hours at 0 °C).

The fatty acid composition of the acyl groups in the glycerides (MG, DG and TG) in the reacted portion will depend on the fatty acid composition of the acyl groups in the fat composition. The fat composition and the reacted portion preferably have similar fatty acid profiles. According to the invention, the weight of fatty acids that are present in the fat composition in an amount of greater than 5 % by weight of the composition will vary in the reacted portion by 50 % or less, more preferably 33 % or less, even more preferably 25 % or less. For example, the ratio of the weight % for the C12:0 content in the fat composition to the weight % for the C12:0 content in the reacted portion may be in the range of 1.5:1 to 1:1.5, more preferably 1.33:1 to 1:1.33, even more preferably 1.25:1 to 1:1.25. Preferably, for each of the fatty acids C12:0, C14:0, C16:0 and C18:1, the weight ratio of the content in the fat composition to the content in the reacted portion is in the range of 1.5:1 to 1:1.5, more preferably 1.33:1 to 1:1.33, even more preferably 1.25:1 to 1:1.25. For example, if the C16:0 content of the fat composition is 16 % by weight, the C16:0 content of the reacted portion is preferably in the range 11-24 % by weight (i.e., varying by 50 % either side of 16 %). The fatty acid profile (i.e., composition) of the fat composition and the reacted portion may be determined, for example, by fatty acid methyl ester analysis (FAME) using gas chromatography according to ISO 15304.

Preferably, the self-emulsifying fat composition has a weight ratio of DG to MG of at least 4:1, more preferably from 4:1 to 10:1.

Prior to step d), the method preferably comprises the steps of determining the amounts of MG and DG in the reacted portion and the amounts of MG and DG in the fat composition. Preferably, the amount of the reacted portion to be reintroduced into the fat composition is adjusted based on the determined amounts to obtain the predetermined amounts of MG and DG in the self-emulsifying fat composition. The predetermined amounts are an amount of MG and DG combined in the self-emulsifying fat composition of at least 2.5 % by weight, such as 2.5 % to 30 % by weight, more preferably from 2.5 % to 20 % by weight, even more preferably from 2.5 % to 10 % by weight. The amount of MG in the self-emulsifying fat composition is typically at least 0.5 % by weight, such as from 0.5 to 10 % by weight, preferably 0.5 to 4 % by weight, more preferably from 0.5 to 3 % by weight. Preferably, the amount of DG in the self-emulsifying fat is at least 2 % by weight, such as from 3 to 15 % by weight, more preferably from 4 to 10 % by weight, even more preferably from 5 to 8 % by weight.

It is preferred that no additional emulsifiers are added to the self-emulsifying fat composition. The self-emulsifying fat composition is therefore preferably free of added emulsifiers other than those from the reacted portion i.e., the emulsifier in the self-emulsifying fat composition consists essentially of, or consists of, the reacted portion, optionally after refining. Thus, the self-emulsifying fat composition preferably comprises MG and DG as the sole emulsifiers. The self-emulsifying fat composition is thus typically free of non-glyceride emulsifiers, such as lecithin.

In one aspect, the method as herein described comprises the steps of:
a) providing a fat composition comprising at least 95 % by weight triglycerides;
b) separating a portion from the fat composition;
c) reacting the separated portion with glycerol to obtain a reacted portion comprising monoglycerides (MG) and diglycerides (DG), wherein the weight percentages of fatty acids that are present in the fat composition in an amount of greater than 5 % by weight of the composition will vary in the reacted portion by 50 % or less; and
d) mixing at least part of the reacted portion with the fat composition to obtain a self-emulsifying fat composition comprising from 0.5 to 10 % by weight MG and from 2 to 15 % by weight DG.

Also described herein is a self-emulsifying fat composition obtainable by the method of the invention, and preferably obtained by the method of the invention.

The weight ratio of DG to MG in the self-emulsifying fat composition is preferably from 4:1 to 10:1.

The amount of MG and DG combined in the self-emulsifying fat composition is at least 2.5 % by weight, such as 2.5 % to 30 % by weight, more preferably from 2.5 % to 20 % by weight, even more preferably from 2.5 % to 10 % by weight. The amount of MG in the self-emulsifying fat composition is typically at least 0.5 % by weight, such as from 0.5 to 10 % by weight, preferably 0.5 to 4 % by weight, more preferably from 0.5 to 3 % by weight. Preferably, the amount of DG in the self-emulsifying fat composition is at least 2 % by weight, such as from 3 to 15 % by weight, more preferably from 4 to 10 % by weight, even more preferably from 5 to 8 % by weight.

The self-emulsifying fat composition is used in the preparation of a margarine, bakery fat, puff pastry (i.e., laminating) fat or cake fat.

The self-emulsifying fat composition is used as a blend with one or more other fats and oils when used as the hardstock in a margarine, bakery fat, puff pastry (i.e., laminating) fat or cake fat. The one or more other fats and oils are preferably one or more liquid oils. The weight ratio of the self-emulsifying fat composition to the one or more other fats and oils is preferably in the range from 10:1 to 1:10, more preferably from 5:1 to 1:5, such as from 2:1 to 1:2. Suitable other fats and oils for blending with the fat composition include, for example, rapeseed oil, sunflower oil, soybean oil, canola oil, coconut oil, corn oil, cottonseed oil, flaxseed oil, palm oil, palm kernel oil, peanut oil, safflower oil, sesame oil, and shea butter, and fractions thereof.

Margarines may be formed by mixing the self-emulsifying fat composition with an aqueous phase to form a water-in-oil emulsion. Preferably, no additional emulsifier is required. The amounts of fat and aqueous phase typically range from 10-90 % by weight fat and 90-10 % by weight aqueous phase, such as from 20-80 % by weight fat and 80-20 % by weight aqueous phase or from 30-70 % by weight fat and 70-30 % by weight aqueous phase. Further components of margarines include one or more of colouring agents (such as beta-carotene), flavouring agents (for example, salt and/or citric acid) and preservatives (e.g., potassium sorbate); typically, these components are present in an amount of less than 5 % (such as 0.1 to 3 %) by weight of the margarine. The preparation of margarines from a vegetable fat and an aqueous phase is well-known to those skilled in the art.

Margarines typically comprise from about 80 to 90 % by weight fat.

The margarines may be packaged, for example in tubs or wrappers.

The self-emulsifying fat compositions are also used as bakery fats. The self-emulsifying fat compositions may be used as bakery fats in the form of shortening. Shortening typically comprises the fat blend in plastified form, made plastic by mechanical treatment and/or by the presence of the emulsifier.

Self-emulsifying fat compositions may be used in the production of bakery products. The bakery products may have a laminated structure. For example, the fat blends may be used (or may be suitable for use) as laminating fats, for instance for puff pastry, pies or croissants.

Self-emulsifying fat compositions in the form of margarine, bakery fat or puff pastry (i.e., laminating) fat may be used to form a dough. The dough comprises at least flour and water and preferably comprises flour in an amount of from 30 to 60 % by weight, water in an amount of from 10 to 40% by weight and the margarine, bakery fat or puff pastry (i.e., laminating) fat comprising the self-emulsifying fat compositions of the invention in an amount of from 10 to 50% by weight based on the weight of the dough. Optionally, one or more further ingredients such as salt and flour modifier may be included in the dough. Bakery products are made from dough. The dough preferably has a laminated structure. The bakery products include, for example, puff pastry, croissants, Danish pastries and pies.

Bakery products may comprise the self-emulsifying fat compositions, preferably as a laminating fat. The dough that is used to produce the bakery product may comprise the self-emulsifying fat composition in the form of bakery fat, margarine or laminating fat. A laminated dough may be prepared, for instance, by a method that comprises applying the self-emulsifying fat composition to a plurality of layers of the dough to form a product in which layers of dough alternate with layers of the self-emulsifying fat composition of the invention. Typically, the method comprises applying the self-emulsifying fat composition to the dough, folding the dough and rolling the folded dough.

Doughs comprising the self-emulsifying fat compositions, as a margarine, laminating fat and/or as a bakery fat, may be refrigerated, frozen or otherwise stored prior to use. The frozen dough may be packaged and sold to the consumer.

In order to form a bakery product, the dough is baked, preferably in an oven. Suitable times and temperatures for baking specific bakery products will be well-known to those skilled in the art.

Cake fat may be used to form a batter that can be baked into a cake. Cake batters typically comprise sugar, flour, milk and eggs.

Cakes made using the self-emulsifying fat composition have been found to have improved organoleptic properties and can be made by improved processes. Similarly, puff pastry produced using the self-emulsifying fat composition showed reduced shrink and improved processing.

Also described herein is the use of the self-emulsifying fat composition in the preparation of cakes with improved organoleptic properties or in the preparation of puff pastry with reduced shrink. In both cases, the processing may be improved.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

The examples include reference to the figures in which:
Figure 1 shows cake 1 made with a reference fat containing a commercial emulsifier;
Figure 2 shows cake 2 made with a self-emulsifying fat prepared according to steps a)-d) of the process of the invention;
Figures 3A and 3B show pastry 1 made with a reference fat containing a commercial emulsifier; and
Figures 4A and 4B show pastry 2 made with a self-emulsifying fat of the invention.

### Quantification of triglycerides (TG), diglycerides (DG) and monoqlycerides (MG)

The oil sample is dissolved in dichloromethane and separated using a Waters Alliance HPLC equipped with an Econosphere Silica column. The TG, DG and MG fractions are collected. For quantification, the solvent of the fractions is evaporated and the residue is dissolved in an exact amount of THF. The fractions TG, DG and MG dissolved in THF are subsequently analyzed on a Shimadzu HPLC system equipped with a set of PLGel columns and refractive index (RI) detection. The peak areas of the analysis of the fractions are summarized and the relative content of the fractions is calculated by 100 % normalization based on equal and linear response for each fraction.

### Example 1

One portion of fat (4%, w/w) was removed from an interesterified fat (palm stearin and palm kernel oil). The removed portion of fat was esterified with glycerin (ratio of one mole of glycerin to one mole of fat) in the presence of immobilized lipase originating from *Candida antarctica* B (Novozym^{®} 435). When the reaction was completed, after approximatively 24 hours, this portion was filtered. The portion consisted of monoglycerides and diglycerides having the following composition, w/w:

| | |
|---|---|
| Monoglyceride | 34% |
| Diglyceride | 44% |
| Triglyceride | 22% |

Then this portion comprising monoglycerides and diglycerides was bleached and deodorized by low temperature (mild refining). The portion was reintroduced into the initial interesterified fat at the same percentage (4%, w/w) to obtain a self-emulsifying fat composition. This self-emulsifying fat composition consisted of monoglycerides (MG) and diglycerides (DG) from the same origin with a similar fatty acid composition and, taking account of the MG and DG originally present in the interesterified fat, had the following composition, w/w:

| | |
|---|---|
| Monoglyceride | 1.2% |
| Diglyceride | 6% |
| Triglyceride | 92.8% |

The fatty acid composition of this self-emulsifying fat composition is as follows:

| | |
|---|---|
| C12:0% | 16.5% |
| C14:0% | 6.5% |
| C16:0% | 42.6% |
| C18:0% | 4.2% |
| C18:1% | 22.4% |
| C18:2% | 4.6% |
| C18:3% | 0.1% |

In order to compare the results, we used one commercial emulsifier Palsgaard^{®} 1388 (available from Palsgaard A/S, Denmark) in the reference composition. Palsgaard^{®} 1388 has the following composition, w/w:

| | |
|---|---|
| Monoglyceride | 55% |
| Diglyceride | 38% |
| Triglyceride | 7% |

The fatty acid composition of the monoglyceride and diglyceride components of the self-emulsifying fat composition and Palsgaard^{®} 1388 were respectively determined. The results are shown in the following table:

| | Palsgaard^{®} 1388 monoglyceride | Self-emulsifying fat composition monoglyceride | Palsgaard^{®} 1388 diglyceride | Self-emulsifying fat composition diglyceride |
|---|---|---|---|---|
| C12:0% | 0.2% | 20.7% | 0.1% | 15.7% |
| C14:0% | 5.1% | 7.7% | 5.4% | 6.7% |
| C16:0% | 4.6% | 38.6% | 4.6% | 46.6% |
| C18:0% | 4.4% | 4.1% | 3.7% | 3.3% |
| C18:1% | 73% | 21.8% | 75% | 19.7% |
| C18:2% | 6.1% | 4.3% | 6.3% | 5.0% |
| C18:3% | 0.1% | 0.1% | 0.1% | 0% |

A significant difference in the fatty acid composition of the monoglycerides and diglycerides was observed between the commercial emulsifier and the self-emulsifying fat composition of the invention. The fatty acid composition of both fractions (monoglyceride and diglyceride) is similar to the one of the self-emulsifying fat composition.

### Example 2

A cake margarine was prepared using the self-emulsifying fat composition of Example 1 as hardstock to blend with another vegetable oil, in this case, rapeseed oil (RP). The preparation comprised 50% self-emulsifying fat composition (w/w) and 50% rapeseed oil (w/w). No additional commercial or non-commercial emulsifiers were added. The reference composition was made with 50% of the same interesterified fat (w/w) without any modification and 50% rapeseed oil (w/w). 1% commercial emulsifier (w/w), Palsgaard^{®} 1388 was added. The composition of both fat preparations was shown as following, w/w:

| | Self-emulsifying fat composition | Reference fat composition with commercial emulsifier (Palsgaard^{®} 1388) |
|---|---|---|
| Monoglyceride | 0.6% | 0.5% |
| Diglyceride | 4% | 4% |
| Triglyceride | 95.4% | 95.5% |

Two margarines were made with respect to these two preparations for different applications.

### Example 3

The following recipe was used with both of the margarines of Example 2, respectively, to make cakes:

| | |
|---|---|
| Cake mix | 660g |
| Margarine | 368.5g |
| Egg | 334g |

450g batter of each samples was put into a mould respectively. The batter with self-emulsifying fat of the invention was firm and no fat lumps were observed. The batter with the reference fat containing commercial emulsifier was glossy and some fat lumps were observed in the batter.

The density of batter was measured as following:

| | Density (batter) (g/ml) |
|---|---|
| Sample 1 (made with reference fat containing commercial emulsifier) | 0.75 |
| Sample 2 (made with self-emulsifying fat) | 0.75 |

Then, the cake was baked for 70 minutes at 150°C.

The results of baking loss (%) and height (cm) were shown as following:

| | Baking loss (%) | Height (cm) |
|---|---|---|
| Sample 1 (made with reference fat containing commercial emulsifier) | 8.9 | 7.0 |
| Sample 2 (made with self-emulsifying fat) | 8.7 | 6.6 |

The cake products are shown in the following pictures:

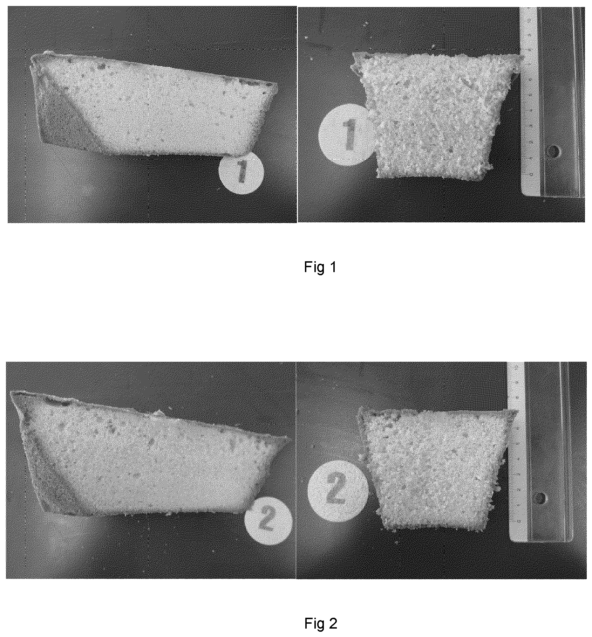

Figure 1 shows cake 1 made with the reference fat containing the commercial emulsifier.

Figure 2 shows cake 2 made with the self-emulsifying fat of the invention.

The cake with reference fat containing the commercial emulsifier tasted tender but not too dry. The cake with self-emulsifying fat tasted very tender, similar to the reference. The mouth feel and taste are positive for both. Sample 1 had quite fine structure with some large air holes. Sample 2 was little less fine than Sample 1. Some air holes were larger in Sample 2. Both had a good cake smell and soft crumb.

The self-emulsifying fat of the invention had the advantage that the batter contained fewer lumps, indicating reduced post-hardening and more work-softening.

Eating behaviour of the cake made with the self-emulsifying fat of the invention is superior to the cake made with the commercial emulsifier.

### Example 4

One portion of fat (10%, w/w) was removed from palm stearin (a non-interesterified fat). This removed portion was esterified with glycerin (ratio of one mole of glycerin to one mole of fat) in the presence of immobilized lipase originating from *Candida antarctica* B (Novozym^{®} 435). When the reaction was completed, after approximatively 24 hours, this portion was filtered. The portion consisted of monoglycerides and diglycerides having the following composition, w/w:

| | |
|---|---|
| Monoglyceride | 30% |
| Diglyceride | 48% |
| Triglyceride | 22% |

This portion comprising monoglycerides and diglycerides was bleached and deodorized by low temperature (mild refining). The portion was reintroduced into the initial non-interesterified fat at the same percentage (10%, w/w) to obtain a self-emulsifying fat composition. This self-emulsifying fat composition consisted of monoglycerides and diglycerides from the same origin with a similar fatty acid composition having the following composition, w/w:

| | |
|---|---|
| Monoglyceride | 3% |
| Diglyceride | 6% |
| Triglyceride | 91% |

In order to compare the results, one reference composition was made with a commercial emulsifier Palsgaard^{®} 1302 (available from Palsgaard A/S, Denmark). Palsgaard^{®} 1302 has the following composition, w/w:

| | |
|---|---|
| Monoglyceride | 48% |
| Diglyceride | 42% |
| Triglyceride | 10% |

### Example 5

The self-emulsifying fat composition of Example 4 was used as a blend with palm oil to make a hardstock for a puff pastry margarine. The preparation contained 20% self-emulsifying fat composition (w/w) and 80% palm oil (w/w). No additional commercial or non-commercial emulsifiers are added. The reference composition was made with 20% the same non-interesterified fat (w/w) without any modification and 80% palm oil (w/w). 0.6% commercial emulsifier (w/w), Palsgaard^{®} 1302 was added. The composition of both fat preparations was shown as following, w/w:

| | Self-emulsifying fat composition | Reference fat composition with commercial emulsifier (Palsgaard^{®} 1302) |
|---|---|---|
| Monoglyceride | 0.6% | 0.4% |
| Diglyceride | 7.7% | 7% |
| Triglyceride | 91.7% | 92.6% |

Two puff pastry margarines were made with respect to these two preparations for application.

### Example 6

The following recipe (w/w) was used with both margarines respectively in puff pastry application:

| | |
|---|---|
| Flour | 41.15% |
| Soft margarine | 6.17% |
| Iced water | 21.4% |
| Salt | 0.41% |
| Puff pastry margarine | 30.86% |

Dough was made from the above ingredients except the puff pastry fat and left to rest for 10 minutes. The dough piece was incised to form a square piece in which the lightly prepared puff pastry fats of Example 5 were folded and laminated. 30 minutes rest was given to the dough after laminating and folding 3 and 4 times. This process was repeated once before 10 cm square pieces were cut out of the dough. The dough pieces were baked after another 30 minutes rest for 20 minutes at 190°C. During the lamination, the following observations were made:

| | Sample 1 (made with reference fat containing commercial emulsifier) | Sample 2 (made with self-emulsifying fat) |
|---|---|---|
| 1st lamination | Lumps visible | Some lumps, but plasticized |
| 2nd lamination | Quite some lumps and irregular dough | Much less lumps, good plasticized layer of margarine |
| 3rd lamination and cutting out | Crumbly, ok for cutting out | Nice |

The results after baking are shown in the following:

| Sample | Shrinkage (mm) | Oven lift (mm) | Puffing 3 pieces | Structure | Baking regularity |
|---|---|---|---|---|---|
| Sample 1 (made with reference fat containing commercial emulsifier) | 87.6mm / 92.3mm | 53.0mm | 170mm | Very fine, no banks | Somewhat wild |
| Sample 2 (made with self-emulsifying fat) | 84.9mm / 94.2mm | 52.3mm | 173mm | Very fine, no banks | More regular |

The products are shown in the following pictures:

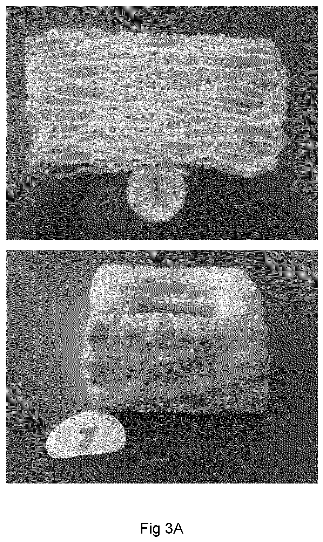

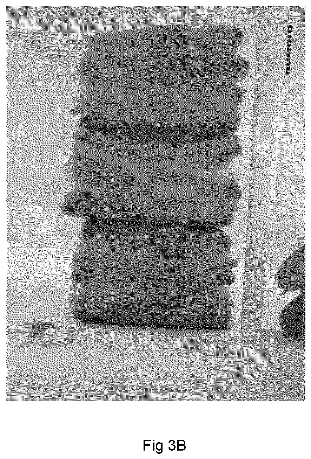

Figures 3A and 3B show pastry 1 made with the reference fat containing the commercial emulsifier.

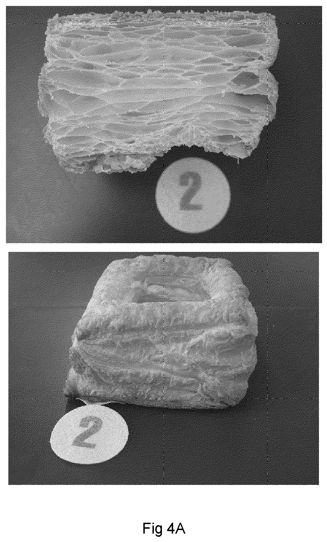

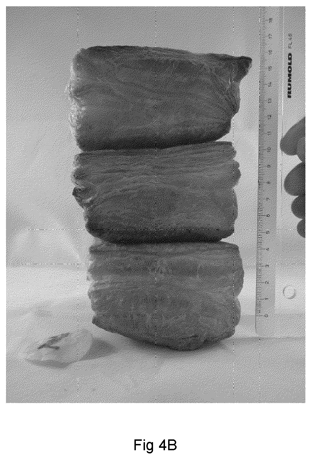

Figure 4 shows pastry 2 made with the self-emulsifying fat of the invention.

Both pastries tasted very nice and crispy.

The self-emulsifying fat prepared according to steps a)-d) of the process of the invention provided a plastic margarine with superior laminating behaviour compared to the reference sample. The puff pastry produced using the self-emulsifying fat composition prepared according to steps a)-d) of the process of the invention showed comparable puff and less shrink than the reference fat containing the commercial emulsifier.

## Claims

1. A method of preparing a margarine, bakery fat, puff pastry fat (such as a laminating fat) or cake fat, comprising the steps of:
(a) providing a fat composition comprising triglycerides;
(b) separating a portion from the fat composition, wherein the portion represents from 0.5 to 20% by weight of the fat composition;
(c) reacting the separated portion with glycerol to obtain a reacted portion comprising monoglycerides (MG) and diglycerides (DG), wherein the weight of the fatty acids that are present in the fat composition in an amount greater than 5% by weight of the composition will vary in the reacted portion by 50% or less;
(d) reintroducing at least part of the reacted portion into the fat composition to obtain a self-emulsifying fat composition, wherein the amount of MG and DG combined in the self-emulsifying fat composition is at least 2.5% by weight; and
(e) blending the self-emulsifying fat composition with one or more other fats or oils to obtain a margarine, bakery fat, puff pastry fat or cake fat, wherein the self-emulsifying fat composition is used as the hardstock in the margarine, bakery fat, puff pastry fat or cake fat.

2. The method according to Claim 1, wherein the portion of the fat composition that is separated in step (b) represents from 0.5 to 10% by weight of the fat composition.

3. The method according to Claim 1 or 2, wherein the portion of the fat composition that is separated in step (b) represents from 0.5 to 5% by weight of the fat composition.

4. The method according to any of the preceding claims, wherein the weight of fatty acids that are present in the fat composition in an amount of greater than 5% by weight of the composition will vary in the reacted portion by 33% or less.

5. The method according to any of the preceding claims, wherein the weight of fatty acids that are present in the fat composition in an amount of greater than 5% by weight of the composition will vary in the reacted portion by 25% or less.

6. The method according to any of the preceding claims, wherein after step c) the MG and DG combined amount to at least 25% by weight of the reacted portion, such as at least 50% by weight, for example from 60 to 90% by weight.

7. The method according to any of the preceding claims, wherein the amount of MG and DG combined in the self-emulsifying fat composition is from 2.5% to 20% by weight.

8. The method according to any of the preceding claims, wherein the amount of MG and DG combined in the self-emulsifying fat composition is from 2.5% to 10% by weight.

9. The method according to any of the preceding claims, wherein the amount of MG in the self-emulsifying fat composition is at least 0.5% by weight, such as from 0.5 to 4% by weight, for example from 0.5 to 2% by weight.

10. The method according to any of the preceding claims, wherein the amount of DG in the self-emulsifying fat composition is at least 2% by weight, such as from 2 to 10% by weight, for example from 5 to 8% by weight.

11. The method according to any of the preceding claims, wherein the weight ratio of DG to MG in the self-emulsifying fat composition is at least 4:1, such as from 4:1 to 10: 1.

12. The method according to any of the preceding claims, wherein the fat composition comprising triglycerides as provided in step (a) is selected from palm oil and its fractions, palm kernel oil and its fractions, and mixtures thereof, optionally interesterified.

13. The method according to any of the preceding claims, wherein the fat composition comprising triglycerides as provided in step (a) is selected from palm stearin and palm kernel olein, and mixtures thereof, optionally interesterified, such as an interesterified mixture of palm stearin and palm kernel oil; and (non-interesterified) palm stearin.

14. The method according to any of the preceding claims, wherein the one or more fats or oils in step (e) are liquid oils, such as wherein the one or more fats or oils are selected from rapeseed oil, sunflower oil, soybean oil, canola oil, coconut oil, corn oil, cottonseed oil, flaxseed oil, palm oil, palm kernel oil, peanut oil, safflower oil, sesame oil, shea butter and fractions thereof.

15. The method according to any of the preceding claims, wherein the weight ratio of the self-emulsifying fat composition to the one or more other fats or oils in step (e) is from 10:1 to 1:10, such as from 5:1 to 1:5, for example from 2:1 to 1:2.

16. The method according to any of the preceding claims, wherein no additional emulsifiers are added.

## Patentansprüche

1. Ein Verfahren zur Herstellung einer Margarine, eines Backfetts, eines Blätterteigfetts (wie eines Laminierfetts) oder eines Kuchenfetts, welches folgende Schritte umfasst:
(a) Bereitstellen einer Fettzusammensetzung, die Triglyceride umfasst;
(b) Abtrennen eines Anteils von der Fettzusammensetzung, wobei der Anteil 0,5 bis 20 Gew.-% der Fettzusammensetzung ausmacht;
(c) Umsetzen des abgetrennten Anteils mit Glycerin, um einen umgesetzten Anteil zu erhalten, der Monoglyceride (MG) und Diglyceride (DG) umfasst, wobei das Gewicht der Fettsäuren, die in der Fettzusammensetzung in einer Menge von mehr als 5 Gew.-% der Zusammensetzung vorhanden sind, in dem umgesetzten Anteil um 50 % oder weniger variiert;
(d) Wiedereinführen mindestens eines Teils des umgesetzten Anteils in die Fettzusammensetzung, um eine selbstemulgierende Fettzusammensetzung zu erhalten, wobei die Menge an MG und DG in der selbstemulgierenden Fettzusammensetzung zusammen mindestens 2,5 Gew.-% beträgt; und
(e) Mischen der selbstemulgierenden Fettzusammensetzung mit einem oder mehreren anderen Fetten oder Ölen, um eine Margarine, ein Backfett, ein Blätterteigfett oder ein Kuchenfett zu erhalten, wobei die selbstemulgierende Fettzusammensetzung als die harte Masse in der Margarine, dem Backfett, dem Blätterteigfett oder dem Kuchenfett verwendet wird.

2. Das Verfahren nach Anspruch 1, wobei der Anteil der Fettzusammensetzung, der in Schritt (b) abgetrennt wird, 0,5 bis 10 Gew.-% der Fettzusammensetzung ausmacht.

3. Das Verfahren nach Anspruch 1 oder 2, wobei der Anteil der Fettzusammensetzung, der in Schritt (b) abgetrennt wird, 0,5 bis 5 Gew.-% der Fettzusammensetzung ausmacht.

4. Das Verfahren nach einem der vorhergehenden Ansprüche, wobei das Gewicht der Fettsäuren, die in der Fettzusammensetzung in einer Menge von mehr als 5 Gew.-% der Zusammensetzung vorhanden sind, in dem umgesetzten Anteil um 33% oder weniger variiert.

5. Das Verfahren nach einem der vorhergehenden Ansprüche, wobei das Gewicht der Fettsäuren, die in der Fettzusammensetzung in einer Menge von mehr als 5 Gew.-% der Zusammensetzung vorhanden sind, in dem umgesetzten Anteil um 25% oder weniger variiert.

6. Das Verfahren nach einem der vorhergehenden Ansprüche, wobei nach Schritt c) MG und DG zusammen mindestens 25 Gew.-% des umgesetzten Anteils ausmachen, wie z.B**.** mindestens 50 Gew.-%, beispielsweise 60 bis 90 Gew.-%.

7. Das Verfahren nach einem der vorhergehenden Ansprüche, wobei die Menge an MG und DG in der selbstemulgierenden Fettzusammensetzung zusammen 2,5 bis 20 Gew.-% beträgt.

8. Das Verfahren nach einem der vorhergehenden Ansprüche, wobei die Menge an MG und DG in der selbstemulgierenden Fettzusammensetzung zusammen 2,5 bis 10 Gew.-% beträgt.

9. Das Verfahren nach einem der vorhergehenden Ansprüche, wobei die Menge an MG in der selbstemulgierenden Fettzusammensetzung mindestens 0,5 Gew.-%, wie 0,5 bis 4 Gew.-%, beispielsweise 0,5 bis 2 Gew.-% beträgt.

10. Das Verfahren nach einem der vorhergehenden Ansprüche, wobei die Menge an DG in der selbstemulgierenden Fettzusammensetzung mindestens 2 Gew.-%, wie 2 bis 10 Gew.-%, beispielsweise 5 bis 8 Gew.-% beträgt.

11. Das Verfahren nach einem der vorhergehenden Ansprüche, wobei das Gewichtsverhältnis von DG zu MG in der selbstemulgierenden Fettzusammensetzung mindestens 4:1, wie 4:1 bis 10:1, beträgt.

12. Das Verfahren nach einem der vorhergehenden Ansprüche, wobei die Fettzusammensetzung, die Triglyceride, wie in Schritt (a) bereitgestellt, umfasst, aus Palmöl und seinen Fraktionen, Palmkernöl und seinen Fraktionen und Mischungen davon ausgewählt ist, gegebenenfalls interesterifiziert.

13. Das Verfahren nach einem der vorhergehenden Ansprüche, wobei die Fettzusammensetzung, die Triglyceride umfasst, wie in Schritt (a) bereitgestellt, aus Palmstearin und Palmkernöl und Mischungen davon, gegebenenfalls umgeestert, wie eine umgeesterte Mischung aus Palmstearin und Palmkernöl, und (nicht umgeestertem) Palmstearin ausgewählt ist.

14. Das Verfahren nach einem der vorhergehenden Ansprüche, wobei das eine oder die mehreren Fette oder Öle in Schritt (e) flüssige Öle sind, wie wenn das eine oder die mehreren Fette oder Öle aus Rapsöl, Sonnenblumenöl, Sojaöl, Canolaöl, Kokosnussöl, Maisöl, Baumwollsamenöl, Leinsamenöl, Palmöl, Palmkernöl, Erdnussöl, Safloröl, Sesamöl, Sheabutter und Fraktionen davon ausgewählt sind.

15. Das Verfahren nach einem der vorhergehenden Ansprüche, wobei das Gewichtsverhältnis der selbstemulgierenden Fettzusammensetzung zu dem einen oder den mehreren anderen Fetten oder Ölen in Schritt (e) von 10:1 bis 1:10, wie von 5:1 bis 1:5, zum Beispiel von 2:1 bis 1:2 beträgt.

16. Das Verfahren nach einem der vorhergehenden Ansprüche, wobei keine zusätzlichen Emulgatoren zugesetzt werden.

## Revendications

1. Procédé de préparation d'une margarine, d'une matière grasse pour boulangerie, d'une matière grasse pour pâte feuilletée (telle qu'une matière grasse laminante) ou d'une matière grasse pour gâteau, comprenant les étapes consistant à :
(a) fournir une composition de matière grasse comprenant des triglycérides ;
(b) séparer une portion de la composition de matière grasse, dans lequel la partie représente de 0,5 à 20 % en poids de la composition de matière grasse ;
(c) faire réagir la portion séparée avec du glycérol pour obtenir une partie ayant réagi comprenant des monoglycérides (MG) et des diglycérides (DG), dans lequel le poids des acides gras qui sont présents dans la composition de matière grasse dans une quantité supérieure à 5 % en poids de la composition variera dans la partie ayant réagi de 50 % ou moins ;
(d) réintroduire au moins une partie de la portion ayant réagi dans la composition de matière grasse pour obtenir une composition de matière grasse auto-émulsifiante, dans lequel la quantité de MG et DG combinés dans la composition de matière grasse auto-émulsifiante est d'au moins 2,5 % en poids ; et
(e) mélanger la composition de matière grasse auto-émulsifiante avec une ou plusieurs autres matières grasses ou huiles pour obtenir une margarine, une matière grasse pour boulangerie, une matière grasse pour pâte feuilletée ou une matière grasse pour gâteau, dans lequel la composition de matière grasse auto-émulsifiante est utilisée comme matière grasse solide dans la margarine, la matière grasse pour boulangerie, la matière grasse pour pâte feuilletée ou la matière grasse pour gâteau.

2. Procédé selon la revendication 1, dans lequel la portion de la composition de matière grasse qui est séparée à l'étape (b) représente de 0,5 à 10 % en poids de la composition de matière grasse.

3. Procédé selon la revendication 1 ou 2, dans lequel la portion de la composition de matière grasse qui est séparée à l'étape (b) représente de 0,5 à 5 % en poids de la composition de matière grasse.

4. Procédé selon l'une quelconque des revendications précédentes, dans lequel le poids des acides gras qui sont présents dans la composition de matière grasse en une quantité supérieure à 5 % en poids de la composition variera dans la portion ayant réagi de 33 % ou moins.

5. Procédé selon l'une quelconque des revendications précédentes, dans lequel le poids des acides gras qui sont présents dans la composition de matière grasse en une quantité supérieure à 5 % en poids de la composition variera dans la portion ayant réagi de 25 % ou moins.

6. Procédé selon l'une quelconque des revendications précédentes, dans lequel, après l'étape c), les MG et DG combinés représentent au moins 25 % en poids de la portion ayant réagi, notamment au moins 50 % en poids, par exemple de 60 à 90 % en poids.

7. Procédé selon l'une quelconque des revendications précédentes, dans lequel la quantité de MG et DG combinés dans la composition de matière grasse auto-émulsifiante est comprise entre 2,5 % et 20 % en poids.

8. Procédé selon l'une quelconque des revendications précédentes, dans lequel la quantité de MG et DG combinés dans la composition de matière grasse auto-émulsifiante est comprise entre 2,5 % et 10 % en poids.

9. Procédé selon l'une quelconque des revendications précédentes, dans lequel la quantité de MG dans la composition de matière grasse auto-émulsifiante est d'au moins 0,5 % en poids, notamment de 0,5 à 4 % en poids, par exemple de 0,5 à 2 % en poids.

10. Procédé selon l'une quelconque des revendications précédentes, dans lequel la quantité de DG dans la composition de matière grasse auto-émulsifiante est d'au moins 2 % en poids, notamment de 2 à 10 % en poids, par exemple de 5 à 8 % en poids.

11. Procédé selon l'une quelconque des revendications précédentes, dans lequel le rapport pondéral entre DG et MG dans la composition de matière grasse auto-émulsifiante est d'au moins 4: 1, notamment de 4: 1 à 10: 1.

12. Procédé selon l'une quelconque des revendications précédentes, dans lequel la composition de matière grasse comprenant des triglycérides comme indiqué à l'étape (a) est sélectionnée parmi l'huile de palme et ses fractions, l'huile de palmiste et ses fractions, et les mélanges de celles-ci, éventuellement interestérifiés.

13. Procédé selon l'une quelconque des revendications précédentes, dans lequel la composition de matière grasse comprenant des triglycérides comme indiqué à l'étape (a) est sélectionnée parmi la stéarine de palme et l'oléine de palmiste, et les mélanges de celles-ci, éventuellement interestérifiés, notamment un mélange interestérifié de stéarine de palme et d'huile de palmiste ; et la stéarine de palme (non-intérestérifiée).

14. Procédé selon l'une quelconque des revendications précédentes, dans lequel l'une ou plusieurs matières grasses ou huiles à l'étape (e) sont des huiles liquides, notamment dans lequel l'une ou plusieurs matières grasses ou huiles sont sélectionnées parmi l'huile de colza, l'huile de tournesol, l'huile de soja, l'huile de canola, l'huile de coco, l'huile de maïs, l'huile de coton, l'huile de lin, l'huile de palme, l'huile de palmiste, l'huile d'arachide, l'huile de carthame, l'huile de sésame, le beurre de karité et des fractions de celles-ci.

15. Procédé selon l'une quelconque des revendications précédentes, dans lequel le rapport pondéral entre la composition de matière grasse auto-émulsifiante et l'une ou plusieurs autres matières grasses ou huiles à l'étape (e) est de 10: 1 à 1: 10, notamment de 5: 1 à 1: 5, par exemple de 2: 1 à 1:2.

16. Procédé selon l'une quelconque des revendications précédentes, dans lequel aucun émulsifiant supplémentaire n'est ajouté.
